(19) **Europäisches Patentamt**
**European Patent Office**
**Office européen des brevets**

(11) **EP 0 639 760 B1**

(12) **EUROPEAN PATENT SPECIFICATION**

(45) Date of publication and mention
of the grant of the patent:
**21.10.1998  Bulletin 1998/43**

(51) Int Cl.[6]: **G01L 9/00**

(21) Application number: **93113215.3**

(22) Date of filing: **18.08.1993**

(54) **Semiconductor type differential pressure measurement apparatus and method for manufacturing the same**

Halbleiter für Differentialdruck-Messapparat und Verfahren zu seiner Herstellung

Semiconducteur pour appareil de mesure de pression différentielle et méthode de sa fabrication

(84) Designated Contracting States:
**DE FR GB NL**

(43) Date of publication of application:
**22.02.1995  Bulletin 1995/08**

(73) Proprietor: **Yokogawa Electric Corporation**
**Tokyo 180 (JP)**

(72) Inventors:
• **Ikeda, Kyoichi**
**Tachikawa-shi, Tokyo, 190 (JP)**
• **Watanabe, Tetsuya**
**Ina-shi, Nagano, 396 (JP)**
• **Tsukamoto, Hideo**
**Ina-shi, Nagano, 396 (JP)**
• **Kudo, Takahiro**
**Ina-shi, Nagano, 396 (JP)**
• **Nagai, Kouji**
**Mitaka-shi, Tokyo, 181 (JP)**
• **Fukuhara, Satoshi**
**Ina-shi, Nagano, 396 (JP)**

(74) Representative: **Henkel, Feiler, Hänzel**
**Möhlstrasse 37**
**81675 München (DE)**

(56) References cited:
**EP-A- 0 338 102        EP-A- 0 490 486**
**EP-A- 0 500 234        DE-A- 3 918 769**
**DE-A- 3 925 070        DE-A- 4 107 347**
**US-A- 4 852 408        US-A- 5 029 479**

• **WESCON CONFERENCE RECORD, vol.33,**
**November 1989, NORTH HOLLYWOOD, CA, US**
**pages 220 - 224, XP116008 K. PETERSEN ET AL.**
**'silicon fusion bonding: revolutionary new tool**
**for silicon sensors and microstructures.'**
• **PATENT ABSTRACTS OF JAPAN vol. 016, no.**
**097 (E-1176) 10 March 1992 & JP-A-03 276 640**
**(TOSHIBA CORP.) 6 December 1991**
• **PATENT ABSTRACTS OF JAPAN vol. 010, no.**
**263 (E-435) 9 September 1986 & JP-A-61 089 668**
**(MATSUSHITA ELECTRIC IND. CO. LTD.) 7 May**
**1986**

**Description**

BACKGROUND OF THE INVENTION

1. Field of the Invention

The present invention relates to a compact and low cost differential pressure measurement apparatus having a simple structure and yet elaborate, which can manufactured without any special pressure resistant casing or any protective mechanism against overpressure, and free of pressure-resistant hermetic terminals.

The present invention also relates to a semiconductor type differential pressure measurement apparatus comprising a measuring diaphragm provided on both sides thereof with two measuring chambers each having a predetermined spacing such that they may be immediately backed by the wall of the measuring chamber when an over pressure is applied to the measuring diaphragm; it directly utilizes the strain detector for measuring the pressure difference as the detector element for overpressure, and therefore is a simple and inexpensive semiconductor type differential pressure measurement apparatus yet highly reliable for detecting overpressure.

The present invention further relates to a semiconductor type differential pressure measurement apparatus manufacturing method which is inexpensive and can manufacture diaphragms with highly precise thicknesses.

The present invention also relates to a method for manufacturing a semiconductor type differential pressure measure apparatus by sacrificial layer etching method whereby there is no possibility diaphragm to the substrate.

2. Description of Prior Art

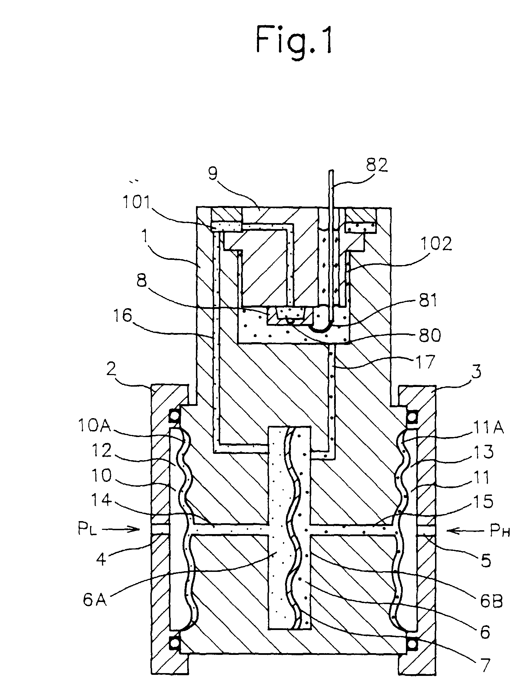

FIG. 1 is an explanatory drawing of a prior art structure. Reference may be made, for example, to FIG. 1 of JP-A-59-56137 (the term "JP-A-" as referred to herein signifies "a published unexamined Japanese patent application").

Referring to FIG. 1, a flange 2 and another flange 3 are fitted and assembled on both sides of a housing 1 by means of welding or the like, and an inlet 5 for introducing a high pressure fluid with a pressure of $P_H$ and an inlet 4 for a low pressure fluid with a pressure of $P_L$ are provided on both of the flanges 2 and 3. A pressure measuring chamber 6 equipped with a center diaphragm 7 and a silicon diaphragm 8 is established inside the housing 1.

The center diaphragm 7 and the silicon diaphragm 8 are each separately fixed on the wall of the pressure measuring chamber 6 to divide the chamber 6 into two parts. Back plates 6A and 6B are provided on the wall of the pressure measuring chamber 6 in such a manner that they face the center diaphragm 7. The periphery of the center diaphragm is welded to the housing 1.

The silicon diaphragm 8 is made entirely from a single crystal substrate. Four strain gauges 80 are formed on one side of a silicon substrate by selective diffusion of an impurity such as boron, and the other side is subjected to machining and etching to form a concave diaphragm. When the silicon diaphragm 8 is subjected to a differential pressure $\Delta P$, two of the thus established strain gauges 80 are subjected to tension whereas the remaining two gauges undergo compression. The strain gauges are connected to a Wheatstone bridge to detect the change of differential pressure $\Delta P$ as a change in electric resistance. A lead 81 is attached at one end to the strain gauge 80, and is connected to a hermetic terminal 82 at the other end.

The hermetic terminal is held by a support 9. The end of the support 9 facing the pressure measuring chamber 6 is fixed and adhered to the silicon diaphragm 8 using a low melting point glass or the like.

Pressure-introducing chambers 10 and 11 are provided between the housing 1 and each of the flanges 1 and 2. Liquid separation diaphragms 12 and 13 are further provided inside the pressure-introducing chambers 10 and 11, and back plates 10A and 11A having shapes similar to the liquid separation diaphragms 12 and 13 are formed on the wall of the housing 1 in such a manner that they face the liquid separation diaphragms 12 and 13.

The liquid separation diaphragms 12 and 13 together with the back plates 10A and 11A define a space communicating with the pressure measuring chamber 6 via communicating holes 14 and 15. Portions 101 and 102 filled with a sealed liquid such as silicon oil are provided between the liquid separation diaphragms 12 and 13 in such a manner that the sealed liquid may reach the upper and the lower planes of the silicon diaphragm through the communicating holes 16 and 17. The sealed liquid is separated into the portions 101 and 102 by the center diaphragm 7 and the silicon diaphragm 8 such that the amounts in both are substantially equal.

The aforementioned construction allows transmission of a pressure being exerted from the high pressure side, by transmitting the pressure applied to the liquid separation diaphragm 13, to the silicon diaphragm 8 via the sealed liquid portion 102. When a pressure is applied from the low pressure side, on the other hand, the pressure exerted to the liquid separation diaphragm 12 is transmitted to the silicon diaphragm 8 via the sealed liquid portion 101.

Accordingly, it can be seen that the silicon diaphragm 8 is deformed by the pressure difference between the pressure on the high pressure side and that on the low pressure side. This quantity of deformation, i.e., strain, is electrically drawn out by the strain gauge 80 for measuring differential pressure.

An apparatus as described in the foregoing, however, suffers the following disadvantages.

(1) Because the pressure $P_H$ on one side of the differential pressure measuring apparatus is applied to the periphery of the sensor, the exterior of the sensor must be covered by a pressure resistant container;
(2) A pressure-resistant hermetic seal terminal for drawing out the electric signal to the outside of the apparatus is required;
(3) A complicated manufacturing method is necessary for making a sensor, because it requires machining of both faces of a silicon wafer; and
(4) An overpressure protection mechanism should be provided separately because the sensor alone has no such protective means against overpressure.

Such an overpressure protection means is disclosed e.g. in EP-A-0 490 486, providing a differential pressure transducer formed on semiconductor substrates. The substrates include a membran being mounted to and sealed to the substrate at the peripheral edges of the membran. The bottom of the cavity forms an overpressure stop to prevent overdeflections of the membran towards the substrate. An overpressure stop formed as a bridge extends above the membran and is spaced therefrom to allow the membran to deflect freely under normal pressure situations but prevent overdeflections.

## SUMMARY OF THE INVENTION

The present invention provides means for overcoming the aforementioned problems.
An object of the present invention is to provide, economically, a high performance compact differential pressure measuring apparatus free from any special pressure resistant casing or a separate protective mechanism against over pressure, yet without using any pressure resistant hermetically sealed terminals.

## BRIEF DESCRIPTION OF THE DRAWINGS

FIG. 1 is an explanatory figure showing the construction of a conventional apparatus;
FIG. 2 is an explanatory figure showing the essential construction of an embodiment according to the present invention;
FIG. 3 is a cross sectional view taken along line A-A of FIG. 2;
FIG. 4 is a cross sectional view taken along line B-B of FIG. 2;
FIG. 5 is a detailed explanatory figure showing an essential portion in FIG. 2;
FIG. 6 is a detailed explanatory figure showing an essential portion in FIG. 2;
FIG. 7 is an explanatory figure showing the etching step of the structure shown in FIG. 2;
FIG. 8 is a planar view of the structure shown in FIG. 7;
FIG. 9 is an explanatory figure showing the step of epitaxial growth in the structure shown in FIG. 2;
FIG. 10 is an explanatory figure showing the polishing step of the structure shown in FIG. 2;
FIG. 11 is an explanatory figure showing the step of forming a concave portion in the structure shown in FIG. 2;
FIG. 12 is an explanatory figure showing the perforation step of the structure shown in FIG. 2;
FIG. 13 is an explanatory figure showing the etching step of the structure shown in FIG. 2;
FIG. 14 is an explanatory figure showing the joining step of the structure shown in FIG. 2;
FIG. 15 is an explanatory figure showing the essential construction of another embodiment according to the present invention;
FIG. 16 is a detailed explanatory figure showing an essential portion in FIG. 2;
FIG. 17 is an explanatory figure showing an operation of the structure shown in FIG. 16;
FIG. 18 is an explanatory figure showing an operation of the structure shown in FIG. 16;
FIG. 19 is an explanatory figure showing an operation of the structure shown in FIG. 16;
FIG. 20 is an explanatory figure showing an operation of the structure shown in FIG. 16;
FIG. 21 is an explanatory figure showing an operation of the structure shown in FIG. 16;
FIG. 22 is an explanatory figure showing an operation of the structure shown in FIG. 16;
FIG. 23 is an explanatory figure showing an operation of the structure shown in FIG. 16;
FIG. 24 is an explanatory figure showing an operation of the structure shown in FIG. 16;
FIG. 25 is an explanatory figure showing an operation of the structure shown in FIG. 16;
FIG. 26 is an explanatory figure showing the essential construction of another embodiment according to the present invention;
FIG. 27 is a cross sectional view taken along line C-C of FIG. 26;
FIG. 28 is a detailed explanatory figure showing an essential portion in FIG. 27;
FIG. 29 is an explanatory figure for an essential portion of an embodiment of a means for judging overpressure of the structure shown in FIG. 26;
FIG. 30 is an explanatory figure showing an operation of the structure shown in FIG. 26;
FIG. 31 is an explanatory figure showing an operation of the structure shown in FIG. 26;
FIG. 32 is an explanatory figure showing an etching step according to another embodiment of the present invention;
FIG. 33 is an explanatory figure showing a step for forming another epitaxially grown layer 205 according to the present invention;
FIG. 34 is an explanatory figure showing a step of forming another silicon oxide layer 206 according to the present invention;

FIG. 35 is an explanatory figure showing a step for forming another epitaxially grown layer 207 according to the present invention;

FIG. 36 is an explanatory figure showing another polishing step according to the present invention;

FIG. 37 is an explanatory figure showing another step for removing a silicon oxide layer 206 according to the present invention;

FIG. 38 is an explanatory figure showing another step for forming a concave portion 208 according to the present invention;

FIG. 39 is an explanatory figure showing another step for perforating a hole 209 according to the present invention;

FIG. 40 is an explanatory figure showing another step for removing a silicon oxide layer 203 by etching according to the present invention;

FIG. 41 is an explanatory figure showing another joining step according to the present invention;

FIG. 42 is an explanatory figure showing an etching step according to still another embodiment of the present invention;

FIG. 43 is a planar view of the structure shown in FIG. 42;

FIG. 44 is an explanatory figure showing a step for forming a further epitaxially grown layer 305 according to the present invention;

FIG. 45 is an explanatory figure showing a further polishing step according to the present invention;

FIG. 46 is an explanatory figure showing a further step for forming a concave portion 306 according to the present invention;

FIG. 47 is an explanatory figure showing a further step for perforating a hole 307 according to the present invention;

FIG. 48 is an explanatory figure showing a further step for removing a silicon oxide layer 303 by etching according to the present invention;

FIG. 49 is an explanatory figure showing a further joining step according to the present invention;

FIG. 50 is an explanatory figure showing an etching apparatus according to a further embodiment of the present invention;

FIG. 51 is an explanatory figure showing an operation of a further embodiment according to the present invention;

FIG. 52 is an explanatory figure showing the operation of yet another embodiment according to the present invention; and

FIG. 53 is an explanatory figure showing the operation of still another embodiment according to the present invention.

## DESCRIPTION OF THE PREFERRED EMBODIMENT

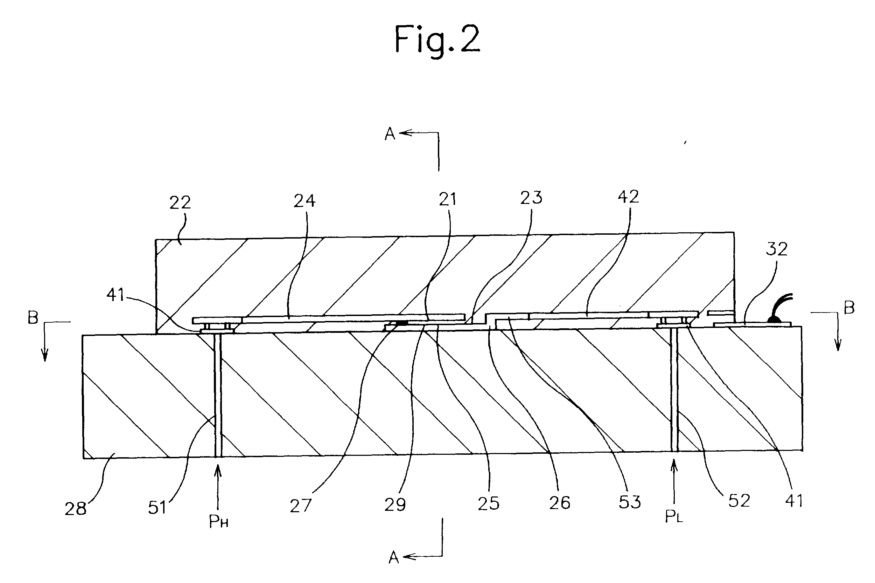

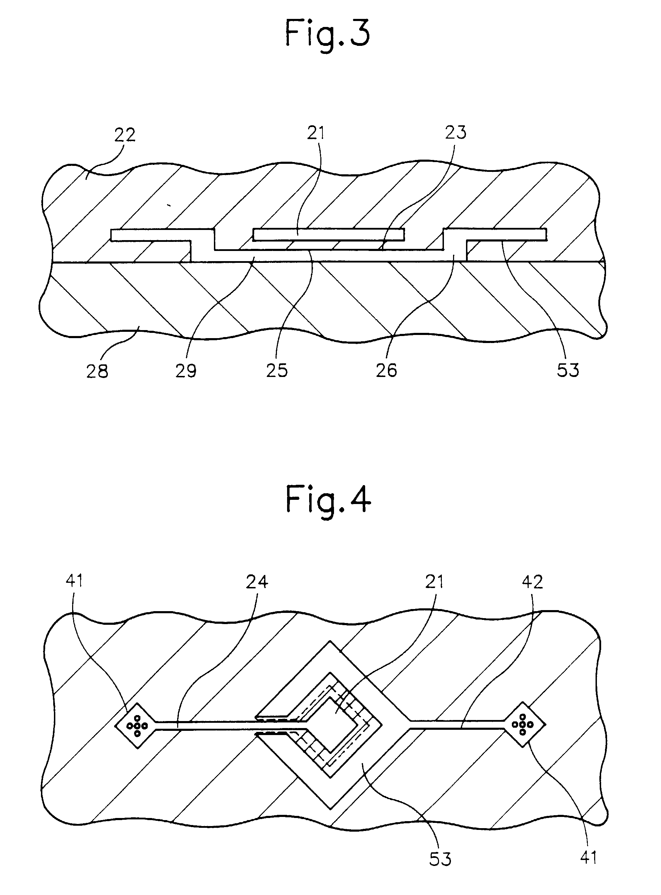

FIG. 2 is an explanatory figure of the essential portion of an embodiment according to the present invention. FIG. 3 shows a cross sectional view taken along line A-A of FIG. 2, and FIG. 4 is a cross sectional view taken along line B-B of FIG. 2.

In the figures, portions having the same functions as those shown in FIG. 1 are indicated with the same symbols. Only portions differing from those indicated in FIG. 1 are explained below.

Referring to FIG. 2, a first chamber 21 having an extremely narrow predetermined spacing is provided on a silicon substrate 22 to form a diaphragm 23.

A first communicating hole 24 which communicates with the first chamber 21 at one of its ends is established on a silicon substrate 22, and a thin film concave portion 25 is provided in the diaphragm 23 on the side opposite to the face on which the first chamber 21 is provided.

A second chamber 26 communicating with the concave portion 25 is provided on the silicon substrate 22, and the diaphragm 23 is surrounded by this second chamber in a ring-like manner except at the first communicating hole 24.

A strain detector element 27 is provided on the side of the diaphragm 23 facing the concave portion 25.

A support substrate 28 is joined by one surface thereof with the surface of the silicon substrate 22 on which the concave portion is provided, and it, together with the concave portion 25, defines a chamber 29 and the second chamber 26.

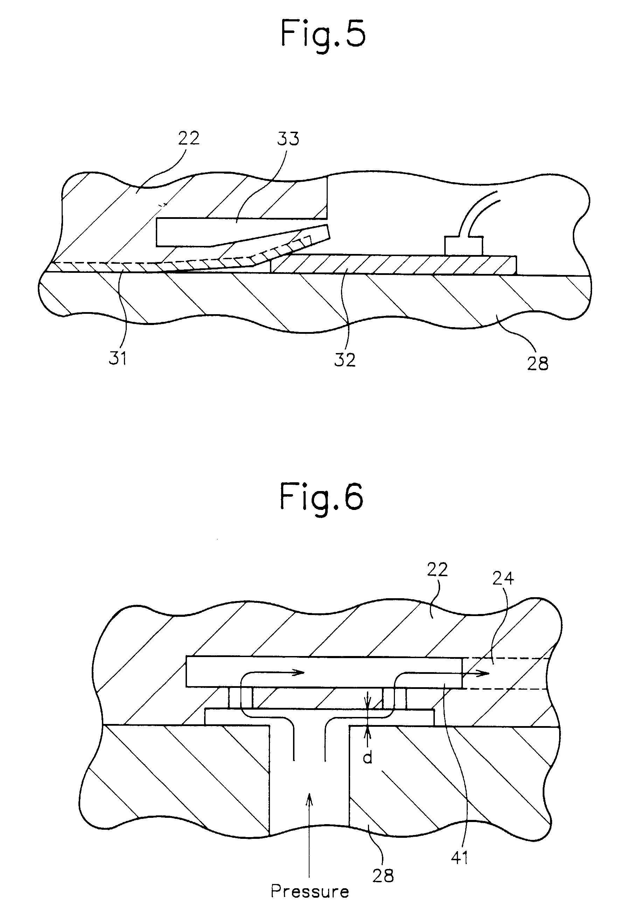

Referring also to FIG. 5, a connection 31 is formed by introducing impurities into the joint surface between the silicon substrate 22 and the support substrate 28, and is connected to the strain detector element 27 at one end.

Referring again to FIG. 5, a contact 32 is provided to support substrate 28 on the joint side with the silicon substrate 22, and is connected to the connection 31 at one end.

As shown in FIG. 5, a groove 33 is formed on the silicon substrate 22 at the vicinity of the contact 32. The groove 33 imparts an appropriate repulsive force to the contact portion between the silicon substrate 22 and the contact 32 to assure stable contact between the contact 32 and the connection 31.

Referring also to FIG. 6, a filter portion 41 is provided to the silicon substrate 22 to prevent the inclusions contained in the fluid, i.e., the pressure medium, from entering the first chamber 21 or the chamber 29. In this embodiment, two filter portions are established in the structure.

The inclusion of unfavorable dust or particles is avoided by applying a semiconductor fabrication process to provide a sufficiently small gap d for the filter portion 41. That is, the gap d of the filter portion 41 is formed in such a manner that it may be sufficiently small as to satisfy the relation $d \leq (A - B)$, wherein A represents the spacing of the first chamber 21, and B represents the displacement of the diaphragm 23. One side of the filter portion 41 is connected to the first communicating hole 24, and the other side is connected to the chamber 29 via the second communicating hole 42.

A first connection hole 51 for introducing pressure is established on the supporting substrate 28 and connected to one of the sides of the filter portion 41. The other end of this hole 51 is left open to the atmosphere.

A second connection hole 52 for introducing pressure is established on the supporting substrate 28 and connected to one of the sides of the filter portion 41. The other end of this hole 52 is left open to the atmosphere.

An extending portion, or overhang, 53 is connected to the second chamber 26. The overhang 53 is provided such that it may receive a high pressure in case such a high pressure is applied to the overhang 53, thereby preventing great stress from generating at the joint portion between the silicon substrate 22 and the support substrate 28.

In the structure as above, the measuring pressure of the high pressure side is applied to the first chamber 21 whereas that of the low pressure side is applied to the chamber 29.

As a result, the silicon diaphragm 23 is deformed in accordance with the pressure difference between the higher and lower pressure sides, and the strain thus generated is electrically detected by the strain detector element 27. Thus, differential pressure can be measured by drawing out the strain externally as an electrical signal via a lead 31 and a contact 32.

When overpressure is applied to the first chamber 21, the wall of the chamber 29 backs onto the diaphragm 23. When an overpressure is applied to the chamber 29, on the other hand, the wall of the first chamber 21 backs onto the diaphragm 23.

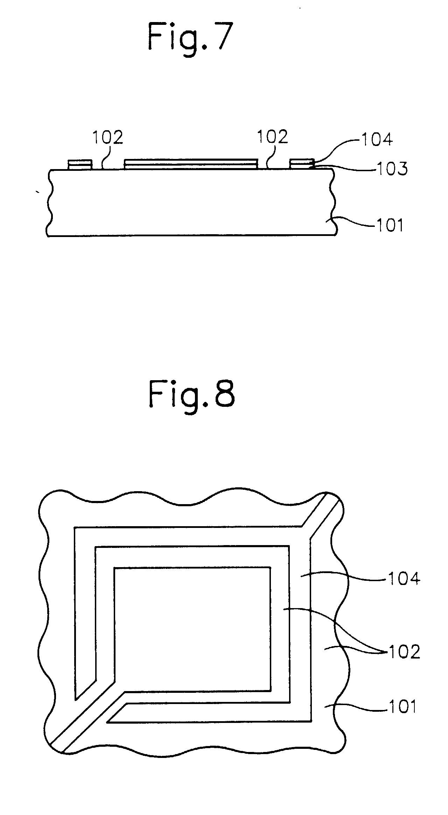

The process for fabricating the apparatus having the aforementioned structure is described below with reference to sequential steps illustrated in FIGs. 7 to 14.

Referring to FIG. 7, a desired pattern 102 is etched out on an SOI (silicon on insulator) wafer 101 by RIE (reactive ion enhanced) etching a silicon oxide layer 103 and a silicon layer 104. The planar view of the structure illustrated in FIG. 7 is given in FIG. 8.

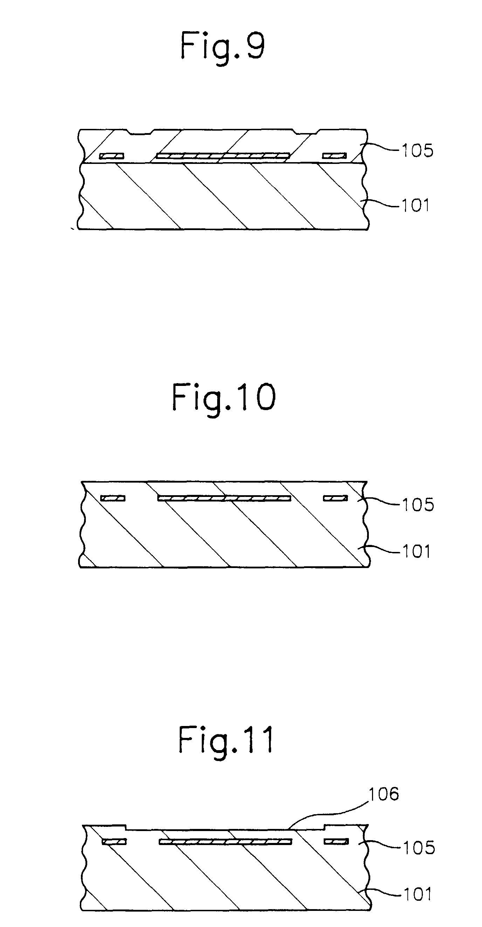

An epitaxially grown layer 105 is established on the surface of the SOI wafer 101 as shown in FIG. 9.

The surface of the epitaxially grown layer 105 is polished as in FIG. 10 to obtain a mirror surface.

Referring to FIG. 11, the surface of the epitaxially grown layer 105 is etched by RIE etching to form a concave portion 106.

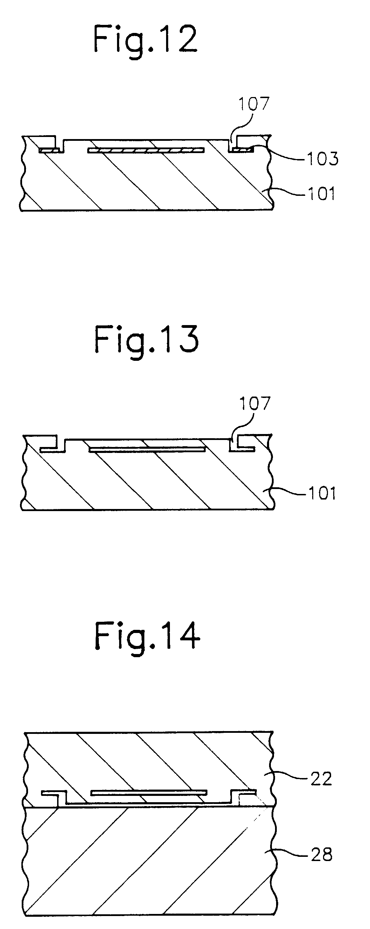

As shown in FIG. 12, a hole 107 for etching the buried silicon oxide layer 103 is formed by either RIE etching or wet etching using potassium hydroxide.

The surface of the silicon oxide layer 103 is etched using an aqueous hydrogen fluoride solution or a hydrogen fluoride gas, as illustrated in FIG. 13.

A silicon substrate 22 is anodically joined to a support substrate 28 made from Pyrex glass. The resulting structure is shown in FIG. 14.

The structure thus obtained results in an apparatus having the following advantages.

(1) The apparatus can be obtained free of any special pressure resistant container, because the exterior of the differential pressure sensor can be exposed to atmospheric pressure;
(2) The apparatus requires no high pressure-resistant hermetically sealed terminals for drawing externally an electric signal;
(3) The fabrication process can be simplified because the silicon wafer is machined from only one side;
(4) The apparatus needs no separate protective mechanism against over pressure, because the sensor itself is equipped with such a mechanism; and
(5) The differential pressure measuring apparatus can be favorably obtained free from noise, because the propagation of an external disturbing strain to the diaphragm 23 can be effectively avoided by the first chamber 21, the chamber 29, and the second chamber 26 surrounding the diaphragm 23.

It can be seen from the foregoing that the present invention economically provides, a high performance compact differential pressure measurement apparatus free from any special pressure resistant casing or a separate protective mechanism against overpressure, yet without using any pressure resistant hermetically sealed terminals.

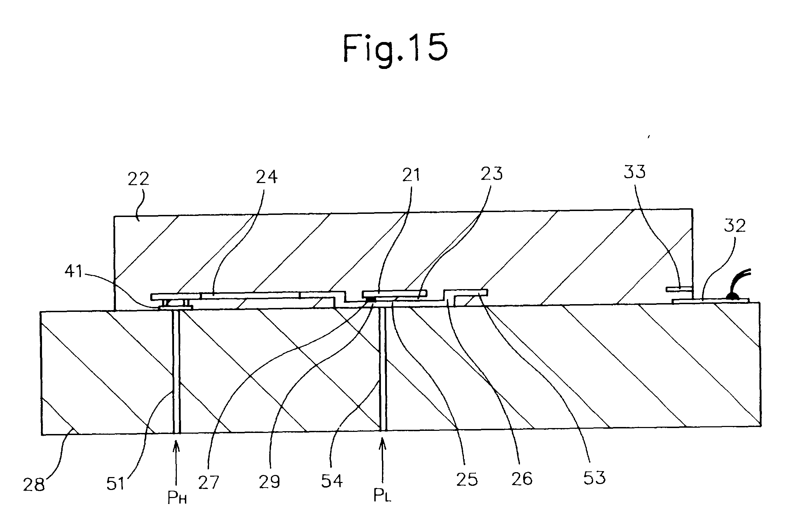

Referring to FIG. 15, which is an explanatory figure showing the essential portion of an apparatus according to another embodiment of the present invention, the structure of the apparatus is described below.

The apparatus according to the present embodiment is characterized in that a third connection hole 54 for introducing pressure and communicating directly to a chamber 29 is provided on a support substrate 28.

The support substrate 28 may be made of silicon or polysilicon (polycrystalline silicon) instead of Pyrex.

It is a matter of course that not only an SOI substrate but also a silicon substrate having a patterned silicon oxide film thereon and polysilicon grown further thereon can be used in the fabrication process.

In the apparatus illustrated in FIG. 2, strain detector elements 271 and 272 are arranged generally on the diaphragm 23 in such a manner that maximum sensitivity is achieved. More specifically, one element is placed at the center and the other on the edge of the diaphragm 23, so that they may undergo reverse phase operation.

The differential pressure measurement apparatus shown in FIG. 2 receives overpressure directly with the diaphragm 23. Accordingly, the measuring diaphragm 23 displaces and, if it surpasses the predetermined spacing, immediately backs onto the wall of the first chamber 21 or the chamber 29 which both function as a measuring chamber.

It can be seen therefrom that the strain which generates on the strain detector elements 271 and 272 undergoes a non-linear change.

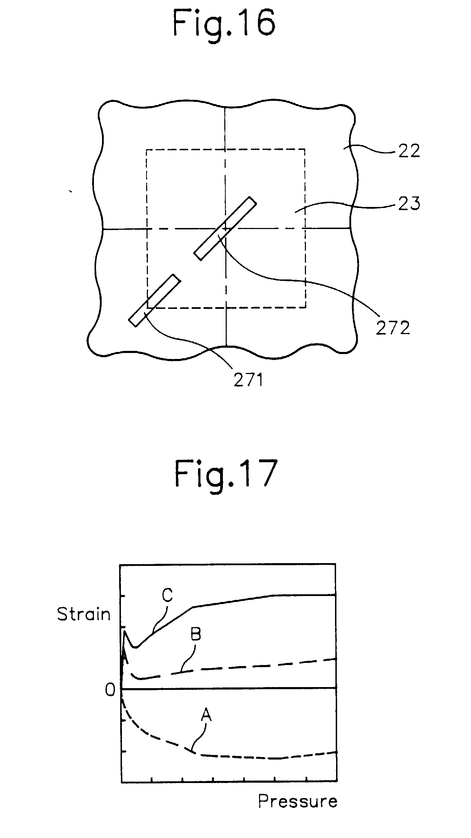

The relationship between the strain detected by the strain detector elements 271 and 272 and the applied pressure is shown in FIG. 17. The curves indicated by A and B in the graph are strain curves obtained by the detector elements 271 and 272, respectively, and the curve indicated by C corresponds to the difference between the strain obtained by the detector elements 271 and 272.

The process of detecting overpressure using the strain detector elements 271 and 272 is described below.

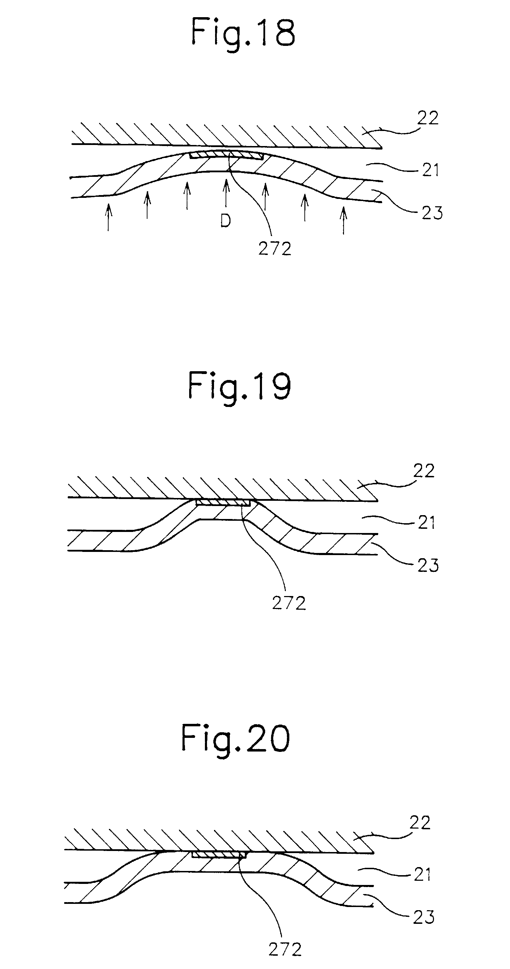

(1) Referring to the strain detector element 272 placed in the center of the diaphragm 23 as shown in FIG. 18, a tensile strain can be detected when an overpressure is applied from the direction indicated with an arrow marked D until the diaphragm 23 touches the wall of the first chamber 21.

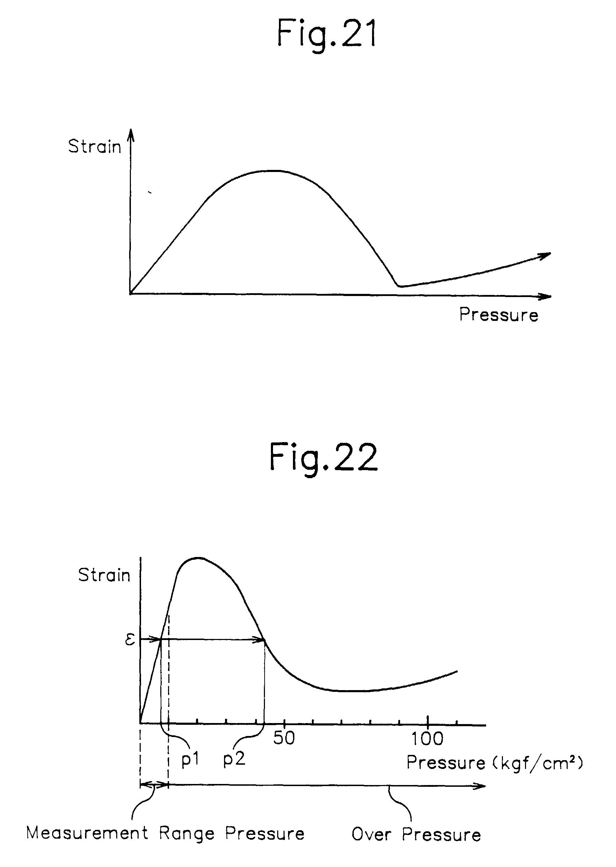

It can be seen from FIG. 19 that compression strain is detected instead of tensile strain once the diaphragm is brought into contact with the wall of the first chamber 21. In the subsequent process of extending the diaphragm 23 against wall of the first wall 21 which the diaphragm 23 is backed up against as shown in FIG. 20, the strain again turning into a tensile strain. Conclusively, the strain detected by the strain detector element 272 on applying overpressure changes from an increase to decrease, and then to increase again. This change in detected strain is illustrated in the graph of FIG. 21.

It can be seen from the foregoing that there is no one-to-one correspondence between the applied pressure and the strain is detected by the strain detector element 272 alone. It follows that, as can be seen in the graph of FIG. 22, the detected strain $\xi$ cannot be definitely designated an overpressure, because the strain as read may be identified as either a pressure P1 within the allowable measurement range or a pressure P2 belonging to the overpressure range.

(2) The strain detected by the strain detector element 271 which is placed on the edge of the diaphragm 23 increases uniformly with increasing applied pressure. This signifies that the relationship between the applied pressure and the strain is a one-to-one correspondence and that the overpressure can be judged from the detected strain.

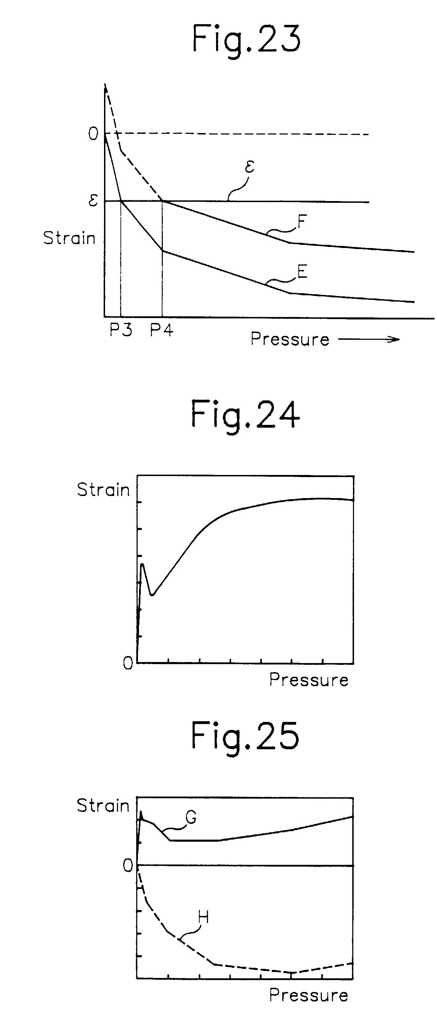

Considering the practical use of the detector element 271, however, it can be seen that it is subject to various changes in conditions with respect to, for example, static pressure and temperature. When a static pressure is applied in addition to differential pressure, for instance, the strain detected by the strain detector element 271 includes an additional offset. Accordingly, the true characteristic curve for the strain indicated by E in the graph of FIG. 23 may be displaced to give curve F as shown in the same graph. If the initial strain under overpressure should be determined as $\xi$, the actual overpressure may slip from P3 to P4 making detection thereof impossible.

(3) Then, to cancel out the influence attributed to static pressure, temperature, etc., the difference between the output signals from the strain detector elements 271 and 272 may be calculated and used for judging the overpressure.

This method, however, is not feasible because the differential signal obtained from the strain detector elements 271 and 272 again has no one-to-one correspondence with the applied pressure. This can be seen clearly in FIG. 24. The reason for the lack of one-to-one correspondence in the relationship between the applied pressure and the detected differential strain signal is believed to be as follows. That is, the strain detector element 271 recovers too fast from the deformed state under compression so that even when the differential signal is detected between the detector elements 271 and 272, no output can be obtained as a uniformly decreasing or increasing signal under such an overpressure condition.

In FIG. 25 is given the relation between the applied overpressure and the strain detected by the strain detector element 272 (the curve marked with G) and that between the applied pressure and the strain detected by the strain detector element 271 (the curve marked with H).

It can be seen from the foregoing that overpressure cannot be detected with sufficient precision by any of the aforementioned three methods.

Furthermore, a means of providing a detector element for detecting overpressure in addition to the strain detector elements 271 and 272 can be considered. However, the installation of an additional strain detector element for detecting overpressure requires novel structures and electric circuits to be incorporated. This inevitably causes an increase in the manufacturing cost and additional process steps to be incorporated in the manufacturing method.

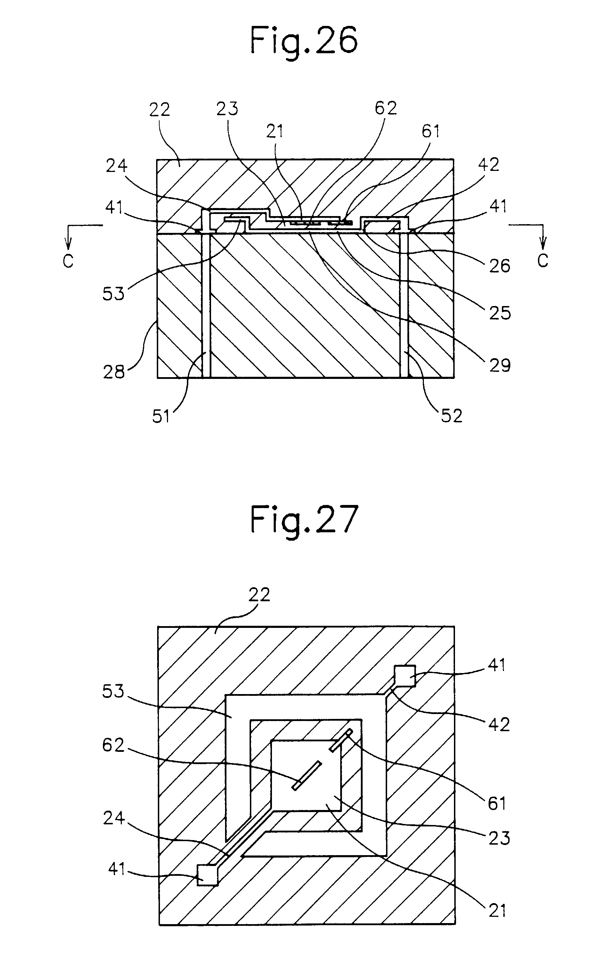

In FIG. 26 is shown an explanatory figure of the essential portion of another embodiment according to the present invention. FIG. 27 shows a cross sectional view taken along line C-C of FIG. 26.

In the figures, the portions having the same functions as those shown in FIG. 2 are indicated with the same symbols. Only the portions differing from those indicated in FIG. 2 are explained below.

A first strain detector element 61 is placed at the edge portion of the measuring diaphragm 23. A second strain detector element 62 is placed at a position slightly offset from the center of the diaphragm 23 in such a manner that the differential between the output signal therefrom and that from the first strain detector element 61 may change as a single-value function (i.e., the differential signal is in one-to-one correspondence with the applied pressure).

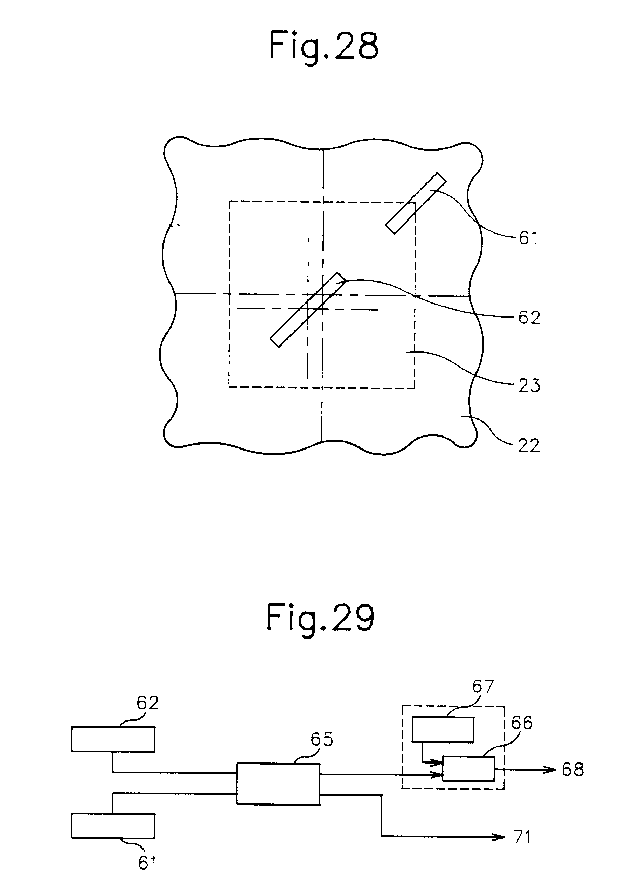

A means 63 for detecting overpressure which detects the differential signal between the signals from the first strain detector element 61 and the second strain detector element 62 is provided to judge whether an overpressure is applied or not. Referring to FIG. 29, for example, the means 63 for detecting overpressure may comprise a CPU (central processing unit) 65 to perform differential calculation on the signals from the first strain detector element 61 and the second strain detector element 62, and a signal based on the judgement after comparing the differential with the standard signal 67 using a comparator is output as an overpressure judging signal 68.

A detection signal 71 for the differential of measured pressure is also output from the results obtained through the calculation in the CPU 65.

In the apparatus having the aforementioned structure, a measuring pressure of the high pressure side and a measuring pressure of the low pressure side are applied respectively to the measuring chambers 21 and 29 provided on both sides of the measuring diaphragm 23. Then, as a result, the silicon diaphragm 23 deforms in correspondence to the pressure difference between the applied higher and lower pressures. The strain resulting from the deformation of the diaphragm is electrically detected by the strain detector elements 61 and 62, and the signal corresponding to the strain is output to the exterior via a lead 31 and a contact 32 to give the differential pressure.

When an overpressure is applied to the diaphragm 23, the wall of either of the measuring chambers 21 and 29 backs up against the deformed diaphragm.

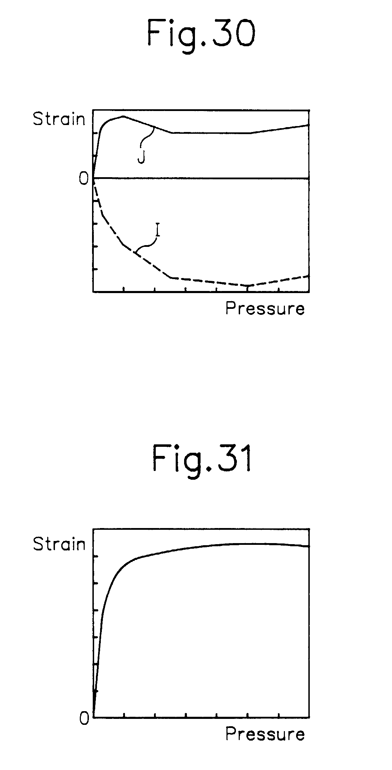

In FIG. 30 is given the relation between the applied overpressure and the strain detected by the strain detector element 61 (the curve marked with I) and that between the applied pressure and the strain detected by the strain detector element 62 (the curve marked with J). The graph shown in FIG. 31 shows the relation between the overpressure and the difference between the strain detected by the detector elements 61 and 62.

When a strain detector element 272 is placed at the center of the diaphragm 23 as in a conventional construction, the signal for the difference in strain yields a characteristic curve exhibiting an abrupt decrease from the point where the diaphragm 23 contacts with the wall of the measuring chambers 21 and 29. Reference may be made to FIG. 24 for such a characteristic curve. In contrast to this characteristic behavior for the conventional apparatuses, that according to the present invention yields a uniformly increasing curve as shown in FIG. 31 for the differential of the detected strains. Since the strain can be expressed as a single-valued function of the applied pressure (i.e., the difference between the detected strains is in one-to-one correspondence to the applied pressure), whether an overpressure is applied or not can be easily judged.

This advantage in the apparatus according to the present invention is believed to be attributable to the fact that decrease in the detected strain for the strain detector element 62 is somewhat relaxed as compared with the abrupt recovery of the strain in the conventional strain detector element 272. More specifically, it is believed that the strain recovery occurs only in a part of the fixed portions of the strain detector element 62 and that it does not take place at other fixed portions.

It can be seen from the foregoing that the difference between the detected strains from the strain detector elements 61 and 62 does not yield a decrease in the characteristic strain curve with respect to the applied pressure, and that thereby it can be applied to detecting overpressure.

In conclusion, a semiconductor type differential pressure measurement apparatus capable of detecting overpressure with high reliability can be obtained. The overpressure can be detected with high reliability by using a semiconductor differential pressure measuring apparatus equipped with a measuring diaphragm 23 which can be readily backed up by the walls of chambers 21 and 29, provided that one of the strain detector elements, i.e., the element 62, is placed slightly offset from the center of the diaphragm 23, and thereby calculating the difference between the strain detected by the strain detector element 62 and the strain detector element 61 established on the edge portion of the diaphragm 23.

Furthermore, the apparatus according to the present invention can be manufactured without a separate strain detector element for detecting overpressure. Accordingly, a simple and highly reliable semiconductor type differential pressure measurement apparatus can be economically obtained with good economy.

The apparatus according to the present invention can be obtained by slightly displacing the position of the strain detector element from the position in a conventional apparatus. It follows that the apparatus according to the present invention can be fabricated by a slight change in the semiconductor fabrication process such as changing the etching pattern. Thus, the acquired knowledge in manufacturing semiconductors can be fully utilized to obtain good product yield.

In short, the present invention realizes a simple and economical semiconductor type differential pressure measurement apparatus which is capable of detecting overpressure with high reliability.

Referring to the apparatus illustrated in FIG. 2, the precision of finishing the diaphragm 23 to a desired thickness depends on the polishing step as shown in FIG. 10. Polishing methods in general yield a precision of about ±5 μm for a finished thickness of 500 μm, and a higher precision cannot be achieved. The thickness of the diaphragm used in the apparatus according to the present invention is about 20 μm. However, a dimensional precision of ±5 μm is too large and impairs the product yield. A poor product yield raises the manufacturing cost.

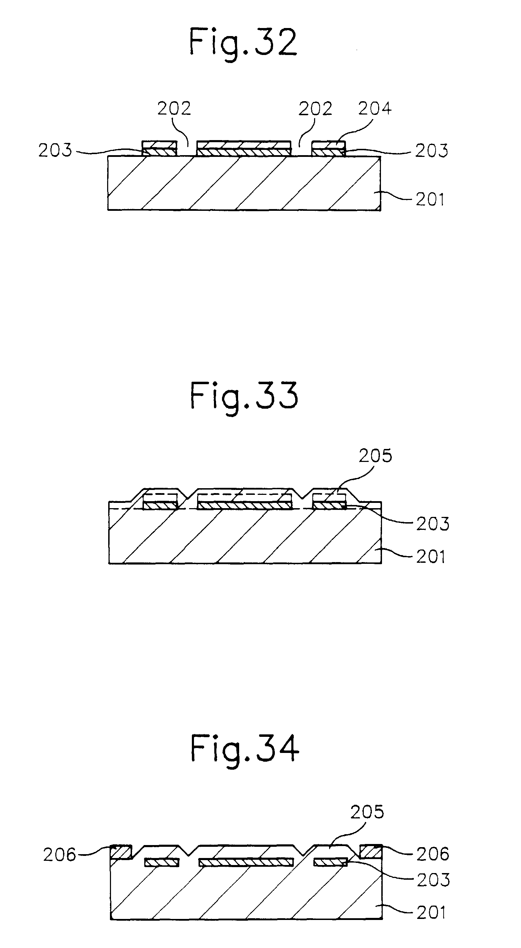

Referring to FIGs. 32 to 41, another embodiment according to the present invention for overcoming the problem above is described below. More specifically, a method for manufacturing a semiconductor type differential pressure measurement apparatus as illustrated in FIG. 2 is explained. The present method provides an apparatus equipped with a diaphragm whose thickness dimension is controlled with high precision, and yet which is economical.

Referring to FIG. 32, an SOI wafer having a silicon oxide layer 203 and a silicon layer 204 is subjected to RIE etching to remove the predetermined portions 202. In this case, for example, the silicon substrate 204 is about 600 μm in thickness, and comprises thereon the silicon oxide layer 203 which is about 1 μm thick and the silicon layer 204 which is about 0.5 μm thick.

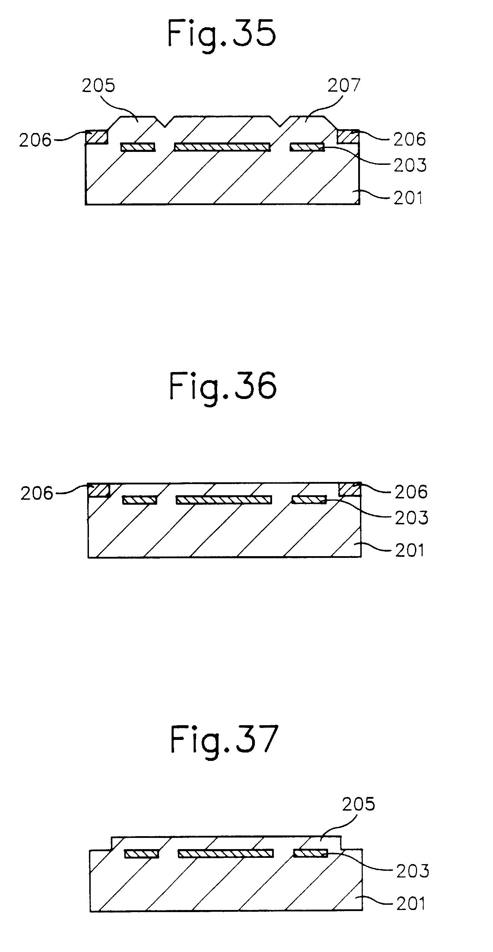

An epitaxially grown layer 205 is then grown to a thickness of about 20 μm on the surface of the SOI wafer 201. The resulting structure is shown in FIG. 33. The thickness of the diaphragm 23 depends on the thickness of this epitaxially grown layer 205.

A silicon oxide film 206 is then patterned on the peripheral surface of the epitaxially grown layer 205. This structure is shown in FIG. 34. The thus patterned silicon oxide film 206 functions as a stopper in the selective polishing.

Referring to FIG. 35, an epitaxially grown layer 207 is developed at a predetermined thickness on the surface of the previously obtained epitaxially grown layer 205. The epitaxially grown layer 207 may be established, for instance, at a thickness of about 5 μm.

Referring to FIG. 36, the resulting structure is subjected to selective polishing using the silicon oxide film 206 as a stopper. This step is conducted by mechanical polishing using a polishing solution comprising a weakly alkaline solution having suspended therein colloidal silica (a fine powder of silicon oxide). Because the ratio of the polishing rate of silicon to that of silicon oxide amounts to about 100, polishing does not advance beyond the silicon oxide film 206.

The silicon oxide film 206 is then removed by etching to give the structure shown in FIG. 37.

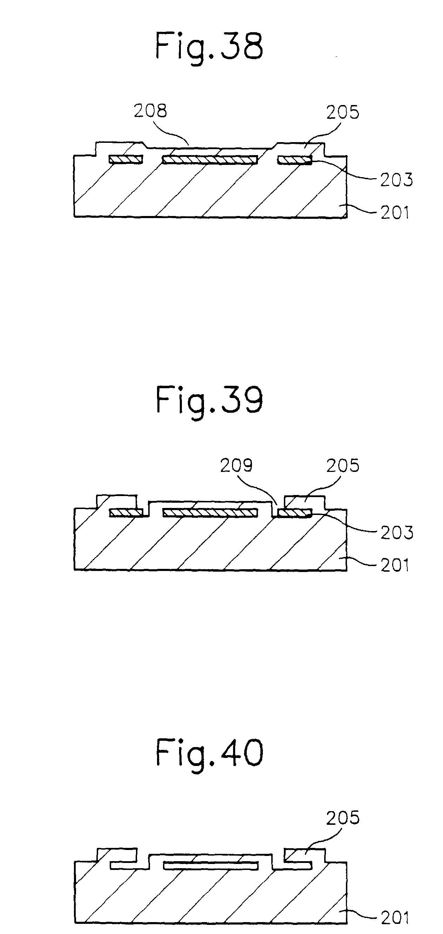

A concave portion 208 is etched on the epitaxially grown layer 205 by RIE etching to give the structure shown in FIG. 38.

Referring to FIG. 39, a hole 208 for use in etching the silicon oxide layer 203 in the SOI wafer is perforated in the epitaxially grown layer 205 by etching, using either RIE etching or potassium hydroxide.

Referring to FIG. 40, the silicon oxide layer 203 is etched using either an aqueous hydrogen fluoride solution or a hydrogen fluoride gas.

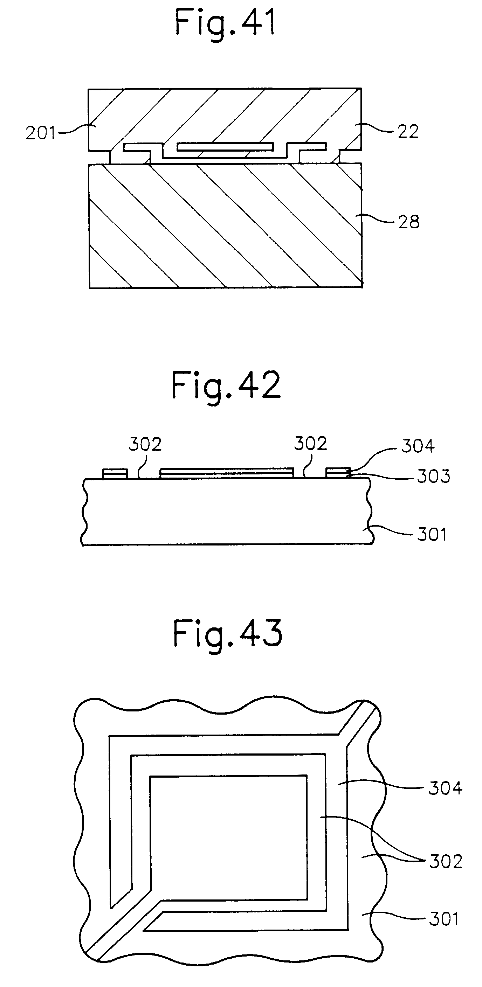

A silicon substrate 22 is anodically joined with a support substrate 28 made of Pyrex glass to obtain the structure shown in FIG. 41.

The thus obtained structure readily results in a semiconductor type differential pressure measurement apparatus comprising a diaphragm 23 having a thickness controlled with high precision. A diaphragm with high dimensional precision was achieved by patterning a silicon oxide film 206 on the surface of the periphery of the epitaxially grown layer 205 and conducting thereafter selective polishing using the silicon oxide film 206 as the stopper. This method, as a result, has a greatly reduced manufacturing cost. Furthermore, in this case, the diaphragm 23 was obtained at a thickness of 20 μm and with a precision as high as ±0.5 μm.

As a matter of course, the SOI substrate may be replaced by a silicon substrate obtained by forming thereon a patterned silicon oxide film and further thereon a polysilicon layer.

It can be seen from the foregoing that the present invention provides a method for manufacturing a semiconductor type differential pressure measurement apparatus capable of economically realizing a diaphragm of high dimensional precision.

Referring to the apparatus illustrated in FIG. 2, a sacrificial layer etching technique may be applied in the establishment of the first chamber 21 between the diaphragm 23 and the silicon substrate 22.

The technique of sacrificial layer etching refers to a method in which first a sacrificial layer is provided between a substrate and a structural layer (a layer which functions as a constituent of a structure), and finally the sacrificial layer alone is removed by selective etching to provide an opening between the structure and the substrate. For details of this process, reference may be made to, for example, "Novel Freeze and Dry Process for Sacrificial Layer Etching Process", *Proc. Annual Meeting of Electrical Society of Japan, 1992*, Vol. 4, No. 397.

The fabrication of an apparatus as shown in FIG. 2, however, suffers the following problems.

On drying the diaphragm 23 after rinsing, the diaphragm 23 tends to be adsorbed into the silicon substrate 22 by the surface tension of the rinsing solution, and it often occurs that the diaphragm cannot be easily separated from the silicon substrate 22.

As a means for overcoming this problem, a freeze and dry process which comprises freezing the rinsing solution before drying and sublimating the frozen rinsing solution has been proposed. However, it is requisite in this process to control the temperature of the wafer to prevent the dissolution of the rinsing solution during the sublimation. It is necessary to prevent dewing from occurring when taking the wafer out into the open air upon completion of the sublimation. Accordingly, the process suffers poor reproducibility and requires complicated process steps.

The surfaces of the diaphragm 23 and the silicon substrate 22 are rendered adhesive after the silicon oxide layer 103 is etched, because hydroxyl ion (OH⁻) groups remain attached to the dangling bonds of the surface silicon atoms. Since those OH⁻ groups readily combine with each other to generate $H_2O$, the silicon atoms are thereby combined by oxygen atoms.

Referring to FIGs. 42 to 49, another embodiment according to the present invention for overcoming the problem above is described below. More specifically, a method for manufacturing a semiconductor type differential pressure measurement apparatus free from mutual adhesion of the diaphragm 23 and the silicon substrate 22 is described below.

Referring to FIG. 42, an SOI wafer having a silicon oxide layer 303 and then a silicon layer 304 is subjected to RIE etching to remove the predetermined portions 302. FIG. 43 gives a planar view of the structure shown in FIG. 42.

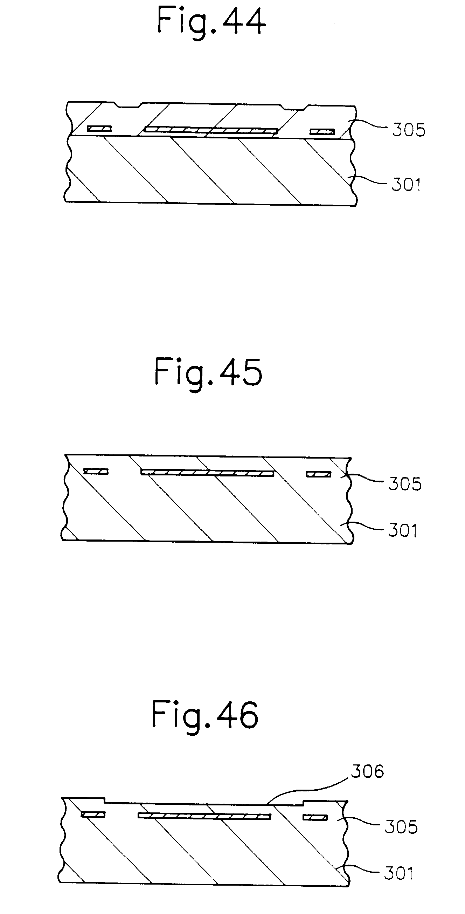

An epitaxially grown layer 305 is then established on the surface of the SOI wafer 301. The resulting structure is shown in FIG. 44.

Referring to FIG. 45, the surface of the epitaxially grown layer 305 is subjected to polishing to obtain a mirror surface.

The thus obtained epitaxially grown layer 305 is then subjected to RIE etching to give a concave portion 306. The resulting structure is shown in FIG. 46.

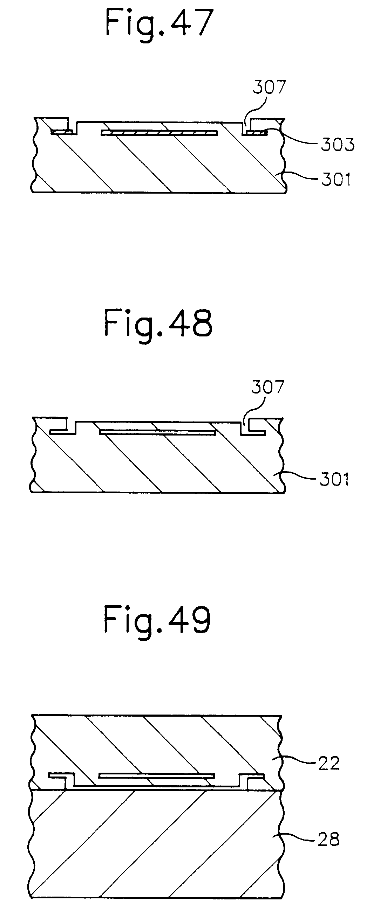

Referring to FIG. 47, a hole 307 for use in etching the buried silicon oxide layer 303 in the SOI wafer is perforated in the epitaxially grown layer 306 by etching, using either RIE etching or potassium hydroxide.

Referring to FIG. 48, the structure is subjected to vapor phase etching in a mixed gas comprising hydrogen fluoride gas and a trace amount of water vapor, using the silicon oxide layer 303 as the sacrificial layer. The vapor phase etching of the sacrificial layer may be conducted, for example, in a mixed gas containing 95% nitrogen gas, 4.99% hydrogen fluoride gas, and 0.01% water vapor. However, it should be understood that the mixing ratio of the gas components is given only as an example, and other gas mixtures may be used so long as vapor phase etching might be conducted therein.

A silicon substrate 22 is anodically joined with a support substrate 28 made of Pyrex glass to obtain the structure shown in FIG. 49.

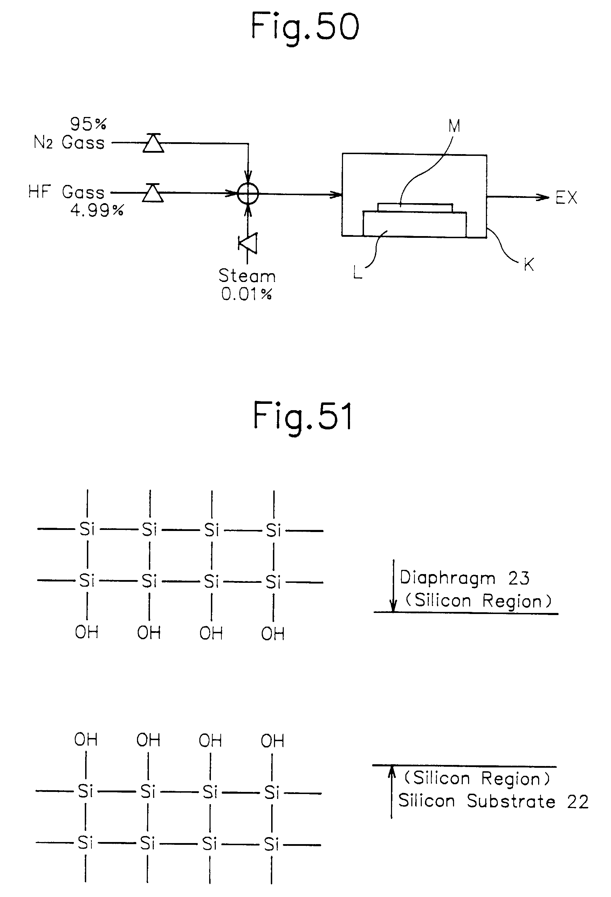

An etching apparatus according to the present invention is shown schematically in FIG. 50. Referring to FIG. 50, the apparatus comprises a chamber K, a sample support L with a wafer M to be etched being mounted thereon.

The vapor phase etching in this apparatus proceeds according to a reaction scheme expressed as follows:

$$SiO_2 + HF + H_2O \Rightarrow SiF_4\Uparrow + H_2O\Uparrow$$

Nitrogen ($N_2$) gas is circulated at a sufficient amount to drive out gaseous silicon fluoride ($SiF_4$) and water ($H_2O$) from the system and thereby prevent liquefaction from occurring.

In this manner, the diaphragm 23 and the silicon substrate 22 can be prevented from adhering to each other by the surface tension of the remaining liquid.

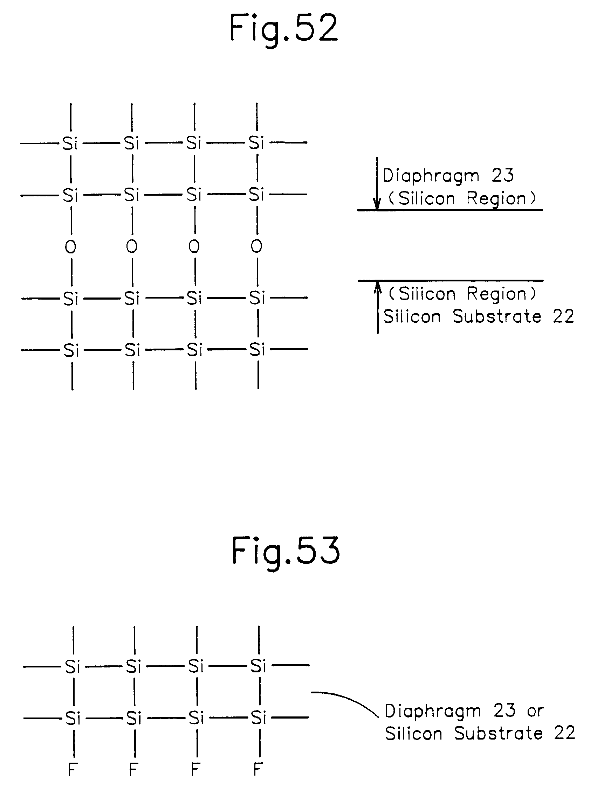

A wet etching process produces silicon surfaces as illustrated in FIG. 51 upon etching of silicon oxide ($SiO_2$). It can be easily understood that the diaphragm 23 and the silicon substrate 22 readily combines with each other through a tight chemical bonding as shown schematically in FIG. 52.

In the method according to the present invention, which is in clear contrast to the wet etching process above, the surface of silicon is terminated with fluorine atoms to give an extremely inactive surface even resistant to a heat treatment of 900°C. For details, reference may be made to "Cleaning using Anhydrous HF gas - 5. Evaluation of Surface Cleaned using HF gas", which appear in *Oyo Butsuri* (*Applied Physics*), Vol. 59, No. 11 (1990), page 1508.

It can be seen from the foregoing that the etching of the silicon oxide sacrificial layer 303 using vapor phase etching not only avoids adhesion of the constituent members in the etching step, but also provides an inert surface after etching. Accordingly, this process is extremely effective in preventing adhesion.

Conclusively, the etching of the silicon oxide employing a vapor phase etching process using hydrogen fluoride gas prevents adhesion of the surface of the constituent members ascribed to the surface tension of an etching solution, and also terminates the surface silicon atoms generated by etching with fluorine atoms to render the surface non-adhesive.

According to the manufacturing method described above referring to FIGs. 42 to 49, a semiconductor type differential pressure measurement apparatus free from mutual adhesion of the diaphragm 23 and the silicon substrate 22 is realized according to another embodiment of the present invention.

While the invention has been described in detail and with reference to specific embodiments thereof, it will be apparent to one skilled in the art that various changes and modifications can be made therein without departing from the scope thereof.

**Claims**

1. A semiconductor type differential pressure measurement apparatus comprising a measuring diaphragm (23) provided with first and second chambers (21, 29) on both sides thereof;

   said first chamber (21) defined by a predetermined space which is provided between a silicon substrate (22) and said diaphragm (23) formed on said silicon substrate (22);
   a first communication hole (24) provided on said silicon substrate (22), one end thereof communicating with said first chamber (21);
   said second chamber (29) provided on said silicon substrate (22);
   a second communicating hole (42) provided on said silicon substrate (22);
   a strain detector element (27) provided on said diaphragm (23); and
   a support substrate (28);

   characterized by

a concave portion (25) provided on a surface of the silicon substrate (22) on a side of said diaphragm (23) opposite that on which said first chamber (21) is provided;

said second chamber (29) consisting of an extending portion (53), a ring chamber (26) and said concave portion (25);

said ring chamber (26) mounted in a ring-like manner around said diaphragm (23) except at said first communicating hole (24), and one end thereof communicating with said concave portion (25) and the other end thereof communicating with said extending portion (53);

said second communicating hole (42) one end thereof communicating with said extending portion(53);

said strain detector element (27) being provided on a side on which said concave portion (25) is established; and

said support substrate (28) having its one surface joined with the surface of said silicon substrate (22) having said concave portion (25) provided thereon, said support substrate (28) together with said concave portion (25) defining said second chamber (29).

2. A semiconductor type differential pressure measurement apparatus as claimed in claim 1, wherein said support (28) is made of Pyrex.

3. A semiconductor type differential pressure measurement apparatus as claimed in claim 1, wherein said support (28) is made of silicon.

4. A semiconductor type differential pressure measurement apparatus as claimed in claim 1, wherein said support (28) is made of polysilicon.

5. A semiconductor type differential pressure measurement apparatus as claimed in claim 1, characterized by further comprising:

a connection (31) made of a conductor and formed by introducing impurities into the joint surface between said silicon substrate (22) and said support substrate (28), which is connected to said strain detector element (27) at one end thereof;

a contact (32) provided on said support substrate on a joint side with said silicon substrate (22) and connected to said connection (31) at one end thereof; and

a groove (33) formed on said silicon substrate (22) at the vicinity of said contact (32), which imparts a suitable repulsive force to the contact portion between said silicon substrate (22) and said contact (32).

6. A semiconductor type differential pressure measurement apparatus as claimed in claim 1, characterized by further comprising:

filters (41) each provided at a gap d on the opposite ends of said first and second communicating holes (24, 42), said gap d being sufficiently small as to satisfy the relation d ≤ (A - B), wherein A represents the spacing of said first chamber (21) and B represents the displacement of said diaphragm (23).

7. A semiconductor type differential pressure measurement apparatus according to claim 1, characterized by

a first strain detector element (61, 271) located on an edge portion of said diaphragm (23) on the side on which said concave portion (25) is established;

a second strain detector element (62, 272) located on said measurement diaphragm (23) on the side on which said concave portion (25) is established and at a position slightly offset from the center of said measuring diaphragm (23), said second strain detector element (272) being located in such a manner that it may output, at least within the allowable limit for measurement, a reverse phase signal with respect to the output signal of said first strain detector element (271), provided that the differential signal of the output signals of said first and said second strain detector elements (61, 62, 271, 272) behaves as a single-valued function of the applied pressure; and

a means (63) for detecting overpressure which judges whether an overpressure is applied or not by detecting the differential of the output signals of said first and said second strain detector elements (61, 62, 271, 272).

8. A method of manufacturing a semiconductor type differential pressure measurement apparatus according to claim 1, comprising a measuring diaphragm (23) provided with measuring chambers (21, 26) on both sides thereof, comprising:

(a) etching predetermined portions (202) of silicon oxide (203) and silicon (204) of an SOI wafer;

(b) allowing an epitaxially grown layer (205) to form on the surface of the SOI wafer;

(c) forming first a silicon oxide layer used for a stopper on the surface of said epitaxially grown layer and then etching the predetermined portions (206) of the silicon oxide layer;

(d) further allowing an epitaxially grown layer (207) to form at a predetermined thickness on the surface of said previously formed epitaxially grown layer (205);

(e) conducting selective polishing on the resulting structure using said silicon oxide layer (206) as a stopper;

(f) forming a concave portion (208) on the surface of said epitaxially grown layer;

(g) forming a hole (209) in said epitaxially grown layer, for use in etching the silicon oxide layer in the SOI wafer either by RIE etching or by an etching process using an alkaline solution;

(h) etching the silicon oxide layer in the SOI wafer using an aqueous hydrogen fluoride solution or hydrogen fluoride gas; and

(i) anodically joining a support substrate (28) with said SOI wafer on the face in which the concave portion is formed.

9. A method of manufacturing a semiconductor type differential pressure measurement apparatus according to claim 1, comprising a measuring diaphragm (23) provided with measuring chambers (21, 26) on both sides thereof, comprising:

(a) etching predetermined portions (302) of silicon oxide (303) and silicon (304) of an SOI wafer (301) using RIE etching;

(b) allowing an epitaxially grown layer (305) to form on the surface of the SOI wafer;

(c) polishing the surface of said epitaxially grown layer to obtain a mirror finished surface;

(d) forming a concave portion (306) on the surface of said epitaxially grown layer by RIE etching;

(e) forming a hole (307) in said epitaxially grown layer for use in etching the buried silicon oxide layer on said SOI wafer, by either RIE etching or an etching process using an alkaline solution;

(f) vapor phase etching the resulting structure in a gas containing hydrogen fluoride gas and water vapor using said silicon oxide layer on said SOI wafer as a sacrificial layer; and

(g) anodically joining a support substrate (28) with said SOI wafer on a face in which the concave portion is formed.

**Patentansprüche**

1. Differenzdruck-Meßgerät vom Halbleitertyp mit einer Meßmembran (23), das mit ersten und zweiten Kammern (21, 29) auf deren beiden Seiten versehen ist;

wobei die erste Kammer (21) durch einen vorbestimmten Raum definiert ist, der zwischen einem Siliziumsubstrat (22) und der auf dem Siliziumsubstrat (22) gebildeten Membran (23) vorgesehen ist;

einem ersten Verbindungsloch (24), das auf dem Siliziumsubstrat (22) vorgesehen ist, wobei das eine Ende mit der ersten Kammer (21) in Verbindung steht;

einer zweiten Kammer (29), die auf dem Siliziumsubstrat (22) vorgesehen ist;

einem zweiten Verbindungsloch (42), das auf dem Siliziumsubstrat (22) vorgesehen ist;

einem Dehnungsdetektorelement (27), das auf bzw. an der Membran (23) vorgesehen ist; und

einem Trägersubstrat (28);

gekennzeichnet durch

einen konkaven Teil (25), der auf der Oberfläche des Siliziumsubstrats (22) auf einer Seite der Membran (23) vorgesehen ist, die derjenigen abgewandt ist, auf der die erste Kammer (21) vorgesehen ist;

die zweite Kammer (29), die aus einem langgestreckten Teil (53), einer Ringkammer (26) und dem konkaven Teil (25) besteht;

die Ringkammer (26), die außer beim ersten Verbindungsloch (24) um die Membran (23) ringartig angeordnet ist und von der ein Ende mit dem konkaven Teil (25) in Verbindung steht und deren anderes Ende mit dem langgestreckten Teil (53) in Verbindung steht;

das zweite Verbindungsloch (42), von dem ein Ende mit dem langgestreckten Teil (53) in Verbindung steht;

das Dehnungsdetektorelement (27), das auf einer Seite vorgesehen ist, auf der der konkave Teil (25) gebildet ist; und

das Trägersubstrat (28), dessen eine Oberfläche mit der Oberfläche des Siliziumsubstrats (22) mit dem darauf vorgesehenen konkaven Teil (25) verbunden ist, wobei das Trägersubstrat (28) zusammen mit dem konkaven Teil (25) die zweite Kammer (29) definiert.

2. Differenzdruck-Meßgerät vom Halbleitertyp nach Anspruch 1, wobei der Träger (28) aus Pyrex besteht.

3. Differenzdruck-Meßgerät vom Halbleitertyp nach Anspruch 1, wobei der Träger (28) aus Silizium besteht.

4. Differenzdruck-Meßgerät vom Halbleitertyp nach Anspruch 1, wobei der Träger (28) aus Polysilizium besteht.

5. Differenzdruck-Meßgerät vom Halbleitertyp nach Anspruch 1, ferner gekennzeichnet durch:

eine Verbindung (31), die aus einem Leiter besteht und durch Einführen von Störstellen bzw. Fremdatomen in die Verbindungsfläche zwischen dem Siliziumsubstrat (22) und dem Trägersubstrat (28) gebildet wird, das mit dem Dehnungsdetektorelement (27) an dessen einem Ende verbunden ist;

einen Kontakt (32), der auf dem Trägersubstrat auf einer Verbindungsseite mit dem Siliziumsubstrat (22) vorgesehen und an dessen einem Ende mit der Verbindung (31) verbunden ist; und

eine Rille (33), die auf dem Siliziumsubstrat (22) in der Nähe des Kontaktes (32) gebildet ist, der auf den Kontaktteil zwischen dem Siliziumsubstrat (22) und dem Kontakt (32) eine geeignete Abstoßungskraft ausübt.

6. Differenzdruck-Meßgerät vom Halbleitertyp nach Anspruch 1, ferner gekennzeichnet durch:

Filter (41), die jeweils bei einer Lücke d an den entgegengesetzten Enden der ersten und zweiten Verbindungslöcher (24, 42) vorgesehen sind, wobei die Lücke d ausreichend klein ist, um die Beziehung d ≤ (A - B) zu erfüllen, worin A den Zwischenraum der ersten Kammer (21) darstellt und B die Verschiebung der Membran (23) darstellt.

7. Differenzdruck-Meßgerät vom Halbleitertyp nach Anspruch 1, gekennzeichnet durch

ein erstes Dehnungsdetektorelement (61, 271), das auf einem Randteil der Membran (23) auf der Seite liegt, auf der der konkave Teil (25) gebildet ist;

ein zweites Dehnungsdetektorelement (62, 272), das auf der Meßmembran (23) auf der Seite, auf der der konkave Teil (25) gebildet ist, und an einer Stelle liegt, die von der Mitte der Meßmembran (23) geringfügig versetzt ist, wobei das zweite Dehnungsdetektorelement (272) so angeordnet ist, daß es zumindest innerhalb einer zulässigen Meßgrenze ein Umkehrphasensignal bezüglich des Ausgangssignals des ersten Dehnungsdetektorelements (271) ausgeben kann, vorausgesetzt, dieses Differenzsignal der Ausgangssignale der ersten und zweiten Dehnungsdetektorelemente (61, 62, 271, 272) verhält sich wie eine einwertige Funktion des angewandten Drucks; und

eine Einrichtung (63) zum Detektieren eines Überdrucks, die beurteilt, ob ein Überdruck einwirkt oder nicht, indem die Differenz der Ausgangssignale der ersten und zweiten Dehnungsdetektorelemente (61, 62, 271, 272) detektiert wird.

8. Verfahren zum Herstellen eines Differenzdruck-Meßgeräts vom Halbleitertyp nach Anspruch 1 mit einer Meßmembran (23), das auf deren beiden Seiten mit Meßkammern (21, 29) versehen ist, umfassend ein:

(a) Ätzen vorbestimmter Teile (202) aus Siliziumoxid (203) und Silizium (204) eines SOI-Wafers;

(b) Bilden einer epitaktisch gewachsenen Schicht (205) auf der Oberfläche des SOI-Wafers;

(c) Bilden einer ersten Siliziumoxidschicht, die für eine Stopp- bzw. Sperreinrichtung verwendet wird, auf der Oberfläche der epitaktisch gewachsenen Schicht und anschließendes Ätzen der vorbestimmten Teile (206) der Siliziumoxidschicht;

(d) weiteres Bilden einer epitaktisch gewachsenen Schicht (207) mit einer vorbestimmten Dikke auf der Oberfläche der vorher gebildeten, epitaktisch gewachsenen Schicht (205);

(e) Durchführen eines selektiven Polierens auf der resultierenden Struktur unter Verwendung der Siliziumoxidschicht (206) als Stopp- bzw. Sperreinrichtung;

(f) Bilden eines konkaven Teils (208) auf der Oberfläche der epitaktisch gewachsenen Schicht;

(g) Bilden eines Lochs (209) in der epitaktisch gewachsenen Schicht zur Verwendung beim Ätzen der Siliziumoxidschicht im SOI-Wafer entweder durch RIE-Ätzen oder durch einen Ätzprozeß unter Verwendung einer alkalischen Lösung,

(h) Ätzen der Siliziumoxidschicht in dem SOI-Wafer unter Verwendung einer wäßrigen Fluorwasserstofflösung oder eines Fluorwasserstoffgases; und

(i) anodisches Verbinden eines Trägersubstrats (28) mit dem SOI-Wafer auf der Seite, an der der konkave Teil gebildet ist.

9. Verfahren zum Herstellen eines Differenzdruck-Meßgeräts vom Halbleitertyp nach Anspruch 1 mit einer Meßmembran (23), das auf deren beiden Seiten mit Meßkammern (21, 29) versehen ist, umfassend ein:

(a) Ätzen vorbestimmter Teile (302) aus Siliziumoxid (303) und Silizium (304) eines SOI-Wafers (301) unter Anwendung eines RIE-Ätzens;

(b) Bilden einer epitaktisch gewachsenen Schicht (305) auf der Oberfläche des SOI-Wafers;

(c) Polieren der Oberfläche der epitaktisch gewachsenen Schicht, um eine Spiegelfläche zu erhalten;

(d) Bilden eines konkaven Teils (306) auf der Oberfläche der epitaktisch gewachsenen Schicht durch RIE-Ätzen;

(e) Bilden eines Lochs (307) in der epitaktisch gewachsenen Schicht zur Verwendung beim Ätzen der vergrabenen Siliziumoxidschicht auf dem SOI-Wafer entweder durch RIE-Ätzen oder einen Ätzprozeß unter Verwendung einer alkalischen Lösung,

(f) Dampfphasenätzen der resultierenden Struktur in einem Gas, das Fluorwasserstoffgas und Wasserdampf enthält, unter Verwendung der Siliziumoxidschicht auf dem SOI-Wafer als Schutzschicht; und

(g) anodisches Verbinden eines Trägersubstrats (28) mit dem SOI-Wafer auf einer Seite, an der der konkave Teil gebildet ist.

**Revendications**

1. Appareil de mesure de pression différentielle du type à semi-conducteur comprenant un diaphragme de mesure (23) pourvu des première et seconde chambres (21, 29) des deux côtés de celui-ci ;

ladite première chambre (21) définie par un espace prédéterminé qui est placé entre un substrat de silicium (22) et ledit diaphragme (23) formé sur ledit substrat de silicium (22) ;

un premier trou de communication (24) placé sur ledit substrat de silicium (22), une extrémité de celui-ci communiquant avec ladite première chambre (21) ;

ladite seconde chambre (29) placée sur ledit substrat de silicium (22) ;

un second trou de communication (42) placé sur ledit substrat de silicium (22) ;

un élément détecteur de contrainte (27) placé sur ledit diaphragme (23) ; et

un substrat de support (28) ;

caractérisé par

une partie concave (25) placée sur une surface du substrat de silicium (22) d'un côté dudit diaphragme (23) opposé à celui sur lequel ladite première chambre (21) est fournie ;

ladite seconde chambre (29) se composant d'une partie en extension (53), une chambre en anneau (26) et ladite partie concave (25) ;

ladite chambre en anneau (26) montée d'une manière en forme d'anneau autour dudit diaphragme (23) sauf sur ledit premier trou de communication (24), et une extrémité de celui-ci communiquant avec ladite partie concave (25) et l'autre extrémité de celui-ci communiquant avec ladite partie en extension (53) ;

ledit second trou de communication (42) une extrémité de celui-ci communiquant avec ladite partie en extension (53) ;

ledit élément détecteur de contrainte (27) étant placé sur un côté sur lequel ladite partie concave (25) est établie ; et

ledit substrat de support (28) ayant sur une de ses surfaces jointes avec la surface dudit substrat de silicium (22) ayant ladite partie concave (25) placée sur celui-ci, ledit substrat de support (28) ainsi que ladite partie concave (25) définissant ladite seconde chambre (29).

2. Appareil de mesure de pression différentielle du type à semi-conducteur selon la revendication 1, dans lequel ledit support (28) est fait de Pyrex.

3. Appareil de mesure de pression différentielle du type à semi-conducteur selon la revendication 1, dans lequel ledit support (28) est fait de silicium.

4. Appareil de mesure de pression différentielle du type à semi-conducteur selon la revendication 1, dans lequel ledit support (28) est fait de silicium polycristallin.

5. Appareil de mesure de pression différentielle du type à semi-conducteur selon la revendication 1, caractérisé en outre en ce qu'il comprend :

un raccordement (31) fait d'un conducteur et formé en introduisant des impuretés dans la surface de jonction entre ledit substrat de silicium (22) et ledit substrat de support (28), qui est connecté audit élément détecteur de contrainte (27) et à une extrémité de celui-ci ;

un contact (32) placé sur ledit substrat de support du côté de jonction avec ledit substrat de silicium (22) et raccordé audit raccordement (31) à une extrémité de celui-ci ; et

une gorge (33) formée sur ledit substrat de silicium (22) au voisinage dudit contact (32), qui communique une force répulsive appropriée à la partie de contact entre ledit substrat de silicium (22) et ledit contact (32).

6. Appareil de mesure de pression différentielle du type à semi-conducteur selon la revendication 1, caractérisé en ce qu'il comprend en outre :

des filtres (41) placés chacun à une distance d sur les extrémités opposées desdits premier et second trous de communication (24, 42), ledit espace d étant suffisamment petit afin de satisfaire la relation d ≤ (A - B), où A représente l'espace de ladite première chambre (21) et B représente le déplacement dudit diaphragme (23).

7. Appareil de mesure de pression différentielle du type à semi-conducteur selon la revendication 1, caractérisé par :

un premier élément détecteur de contrainte (61, 271) situé sur une partie de bord dudit diaphragme (23) du côté sur lequel ladite partie concave (25) est établie ;

un second élément détecteur de contrainte (62, 272) situé sur ledit diaphragme de mesure (23) du côté sur lequel ladite partie concave (25) est établie et à une position légèrement décalée du centre dudit diaphragme de mesure (23), ledit second élément détecteur de contrainte (272) étant situé de manière à ce qu'il puisse fournir, au moins dans la limite admissible pour la mesure, un signal de phase inverse par rapport au signal de sortie dudit premier élément détecteur de contrainte (271), pourvu que le signal différentiel des signaux de sortie desdits premier et second éléments détecteurs de contrainte (61, 62, 271, 272) se comportent comme une fonction de valeur unique de la pression appliquée ; et

un moyen (63) pour détecter une surpression qui détermine si une surpression est appliquée ou non en détectant le différentiel des signaux de sortie desdits premier et second éléments détecteurs (61, 62, 271, 272).

8. Procédé de fabrication d'un appareil de mesure de pression différentielle du type à semi-conducteur selon la revendication 1, comprenant un diaphragme de mesure (23) pourvu de chambres de mesure (21, 26) des deux côtés de celui-ci, comprenant les étapes de :

(a) gravure des parties prédéterminées (202) d'oxyde de silicium (203) et de silicium (204) d'une plaquette de SOI ;

(b) autorisation de former une couche de croissance épitaxiale (205) sur la surface de la plaquette de SOI ;

(c) formation d'abord d'une couche d'oxyde de silicium utilisée comme une couche d'arrêt sur la surface de ladite couche de croissance épitaxiale et ensuite gravure des parties prédéterminées (206) de la couche d'oxyde de silicium ;

(d) de plus autorisation de former une couche de croissance épitaxiale (207) à une épaisseur prédéterminée sur la surface de ladite couche de croissance épitaxiale formée préalablement (205) ;

(e) réalisation d'un polissage sélectif sur la structure résultante utilisant ladite couche d'oxyde de silicium (206) comme couche d'arrêt ;

(f) formation d'une partie concave (208) sur la surface de ladite couche de croissance épitaxiale ;

(g) formation d'un trou (209) dans ladite couche de croissance épitaxiale, à utiliser dans la gravure de la couche d'oxyde de silicium dans la plaquette de SOI soit par gravure de RIE soit par un traitement de gravure utilisant une solution alcaline ;

(h) gravure de la couche d'oxyde de silicium dans la plaquette de SOI utilisant une solution de fluorure d'hydrogène aqueuse ou de gaz de fluorure d'hydrogène ; et

(i) jonction anodiquement d'un substrat de support (28) avec ladite plaquette de SOI sur la face dans laquelle la partie concave est formée.

9. Procédé de fabrication d'un appareil de mesure de pression différentielle du type à semi-conducteur selon la revendication 1, comprenant un diaphragme de mesure (23) pourvu de chambres de mesure (21, 26) des deux côtés de celui-ci, comprenant les étapes de :

(a) gravure des parties prédéterminées (302) de l'oxyde de silicium (303) et du silicium (304) de la plaquette de SOI (301) utilisant une gravure de RIE ;

(b) autorisation de former une couche de croissance épitaxiale (305) sur la surface de la plaquette de SOI ;

(c) polissage de la surface de ladite couche de croissance épitaxiale pour obtenir une surface finie en miroir ;

(d) formation d'une partie concave (306) sur la surface de ladite couche de croissance épitaxiale par gravure de RIE ;

(e) formation d'un trou (307) dans ladite couche de croissance épitaxiale à utiliser dans la gravure de la couche d'oxyde de silicium enterrée sur ladite plaquette de SOI, soit par gravure de RIE soit par un traitement de gravure utilisant une solution alcaline ;

(f) gravure en phase de vapeur de la structure résultante dans un gaz contenant du gaz de fluorure d'hydrogène et de la vapeur d'eau utilisant ladite couche d'oxyde de silicium sur ladite plaquette de SOI comme couche sacrificatoire ; et

(g) jonction anodiquement d'un substrat de support (28) avec ladite plaquette de SOI sur la face dans laquelle la partie concave est formée.

# Fig.1

EP 0 639 760 B1

# Fig.2

# Fig.3

# Fig.4

# Fig.5

# Fig.6

Pressure

# Fig.7

# Fig.8

# Fig.9

# Fig.10

# Fig.11

# Fig.12

107

103

101

# Fig.13

107

101

# Fig.14

22

28

# Fig.15

EP 0 639 760 B1

# Fig.16

# Fig.17

# Fig.18

# Fig.19

# Fig.20

# Fig.21

# Fig.22

# Fig.23

# Fig.24

# Fig.25

26

# Fig.26

# Fig.27

# Fig.28

# Fig.29

# Fig.30

Strain

0

J

I

Pressure

# Fig.31

Strain

0

Pressure

# Fig.32

# Fig.33

# Fig.34

## Fig.35

205   207
206   206
203
201

## Fig.36

206   206
203
201

## Fig.37

205
203
201

# Fig.38

208          205

203
201

# Fig.39

209          205

203
201

# Fig.40

205

201

# Fig.41

201 — 22

28

# Fig.42

302        302        304
                      303

301

# Fig.43

304

302

301

# Fig.44

305
301

# Fig.45

305
301

# Fig.46

306
305
301

# Fig.47

# Fig.48

# Fig.49

# Fig.50

# Fig.51

# Fig.52

Diaphragm 23
(Silicon Region)

(Silicon Region)
Silicon Substrate 22

# Fig.53

Diaphragm 23 or
Silicon Substrate 22